# EUROPÄISCHE PATENTSCHRIFT

(11) **EP 0 797 860 B1**
(45) Veröffentlichungstag und Bekanntmachung des Hinweises auf die Patenterteilung: **31.03.1999**
(21) Anmeldenummer: 95942168.6
(22) Anmeldetag: 15.12.1995
(51) Int. Cl.: H02K 7/14, H02K 5/14, F04B 17/03

(54) **MOTORPUMPENAGGREGAT**
MOTOR-DRIVEN PUMP UNIT
GROUPE MOTOPOMPE

(30) Priorität: 15.12.1994 DE 4444644
(43) Veröffentlichungstag der Anmeldung: 01.10.1997
(73) Patentinhaber: Continental Teves AG & Co. oHG, 60488 Frankfurt (DE)
(72) Erfinder: VOLZ, Peter, D-64291 Darmstadt (DE); REINARTZ, Hans-Dieter, D-60439 Frankfurt am Main (DE); DINKEL, Dieter, D-65817 Eppstein/Ts. (DE)
(86) Internationale Anmeldenummer: EP9504980
(87) Internationale Veröffentlichungsnummer: WO9619031

(56) Entgegenhaltungen:
- WO-A-87/00250
- CH-A- 596 697
- DE-A- 4 235 962

## Beschreibung

Die Erfindung betrifft ein Motorpumpenaggregat gemäß dem Oberbegriff des Anspruchs 1, wie es z.B. in der CH-A-596 697 beschrieben ist.

Ein weiteres derartiges Aggregat ist in der DE-A-42 35 962 beschrieben. Die Zentrierung des Motorgehäuses hinsichtlich der Ankerwelle, die mittels eines Hauptlagers im Pumpengehäuse gehalten ist, geschieht hier wie folgt:

Das Hauptlager ragt ein wenig aus einer Flanschfläche am Pumpengehäuse hervor. Eine Bürstentrageplatte mit einer zentrischen Vertiefung wird auf das aus der Flanschebene hervorragende Lager aufgesetzt. Damit ist die Bürstentrageplatte in radialer Richtung bezüglich des hervorstehenden Lagers ausgerichtet. Die Bürstentrageplatte weist außerdem einen radial außenliegenden Rand auf, auf den das Gehäuse aufgesteckt wird. Die Zentrierung des Motorgehäuses erfolgt somit mittels der zentrisch auf der Flanschfläche ausgerichteten Bürstentrageplatte und damit mittels des in das Pumpengehäuse eingesteckten Hauptlagers.

Es ist ohne weiteres ersichtlich, daß die Bürstentrageplatte sorgfältig bearbeitet werden muß. Insbesondere müssen sowohl der Innenrand, der am Lager anliegt, als auch der Außenrand, auf dem das Gehäuse aufgeschoben wird, mit genauer Toleranz zueinander gefertigt werden.

Bei der Bürstentrageplatte handelt es sich aber um ein Teil, das im allgemeinen im Spritzgußverfahren hergestellt wird. Bei diesem Verfahren können keine so hohen Genauigkeiten eingehalten werden.

Das der Erfindung zugrundeliegende Problem besteht somit darin, mit einfachen Mitteln sicherzustellen, daß das Motorgehäuse exakt zur Achse der Ankerwelle ausgerichtet wird.

Das Problem wird gelöst durch die Merkmalskombination des Anspruchs 1. Weitere vorteilhafte Ausgestaltungen sind in den Unteransprüchen beschrieben.

Die Erfindung wird im folgenden anhand zweier Ausführungsbeispiele näher erläutert. Die Ausführungsbeispiele sind in je einer Fig. dargestellt.

Beide Fig. zeigen einen Querschnitt durch ein Motorpumpenaggregat. Mit 1 ist die Pumpe, mit 2 der Elektromotor bezeichnet. Die Pumpe 1 besteht aus einem Gehäuse 3, das hier nur zum Teil dargestellt ist. Wesentlich ist, daß dieses Gehäuse eine im wesentlichen flache Flanschfläche 4 aufweist, in die eine Sackbohrung 5 einmündet. In einer ersten Stufe 6, die unmittelbar an die Flanschfläche 4 anschließt, ist ein Hauptlager 7 vorgesehen. Es handelt sich dabei um ein Kugellager mit einem Innen- und einem Außenring. Die zweite Stufe 8 schließt an die erste Stufe 6 an. In ihr münden hier nicht dargestellte Querbohrungen ein, in denen die Pumpenkolben laufen. Mit ihren Stirnflächen liegen sie an einen in der zweiten Stufe 8 angeordneten Exenter 9 an. Die dritte Stufe 10 dient der Aufnahme eines Nebenlagers 11, das als Nadellager ausgebildet ist.

Der Elektromotor besteht im wesentlichen aus einem topfförmigen Gehäuse 20, das mit seiner offenen Seite der Flanschfläche 4 zugewandt ist. In der Achse des Gehäuses 20 befindet sich eine Ankerwelle 21, die einen Anker 22 sowie einen Kollektor 23 trägt. An der Innenseite des Gehäuses 20 sind Dauermagnete 24 befestigt. Am Kollektor 23 liegen Bürsten 25 an, die auf einer Trägerplatte 26 befestigt sind. Wie der Fachmann leicht erkennt, handelt es sich dabei um die wesentlichen Elemente eines Gleichstromkommutatormotors.

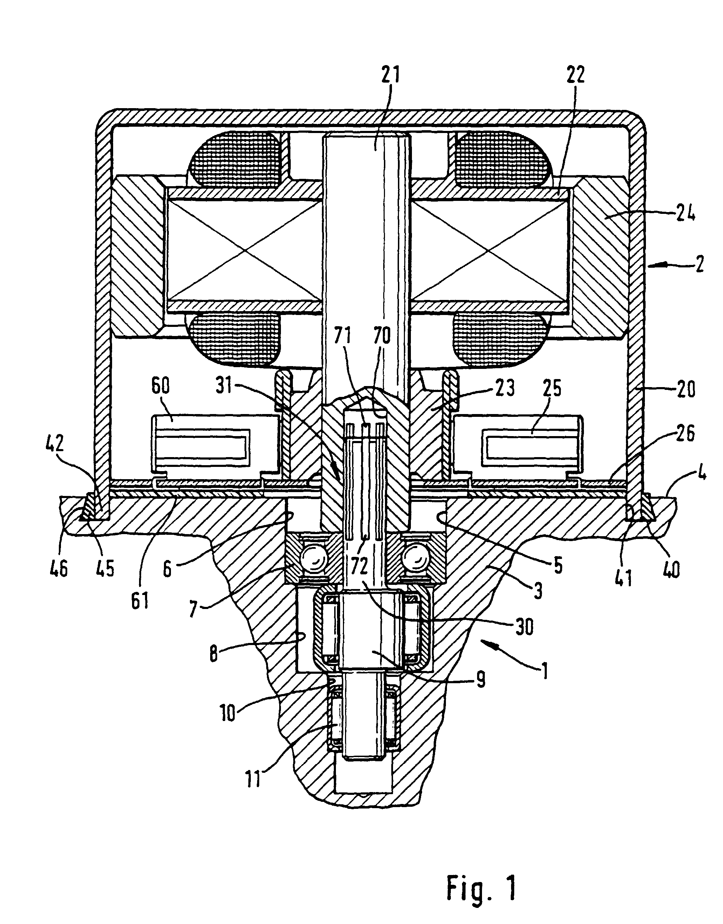

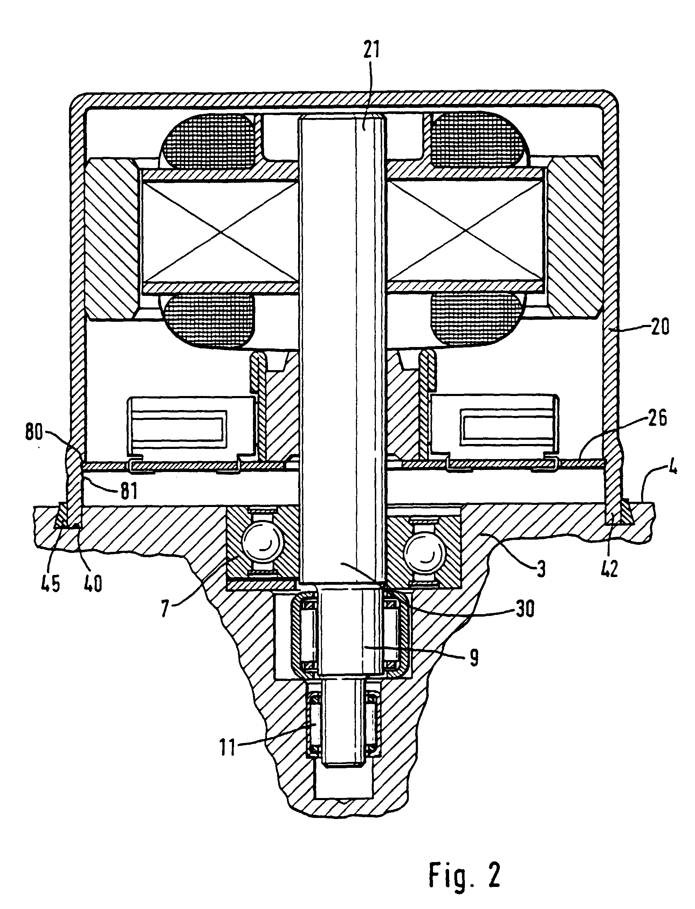

Die Ankerwelle 21 weist eine Verlängerung 30 auf, die in die Sackbohrung 5 hineinragt. Diese Verlängerung 30 ist gemäß der Fig. 1 als gesondertes Element ausgebildet, das über eine Kupplung 31 mit der Ankerwelle 21 des Elektromotors 2 verbunden ist. In der Ausführung nach Fig. 2 ist die Verlängerung einstückig mit der Motorwelle ausgebildet.

Die Verlängerung 30 trägt den schon erwähnten Exenter 9, an den sich über ein Nadellager die nicht dargestellten Pumpenkolben anlegen.

Das Hauptlager 7 und das Nebenlager 11 sind seitlich des Exenters 9 angeordnet und tragen die Verlängerung 30 und damit die Ankerwelle 21 im Pumpengehäuse 3.

Nebenlager 11 und Hauptlager 7 sind im Pumpengehäuse verstemmt, bzw. mit Sicherungselementen festgelegt. Das Nadellager des Exenters weist ein gewisses Spiel auf, wobei Anlauf flächen vorgesehen sind. Die eine Anlauf fläche wird gebildet durch den Stufenübergang von der zweiten in die dritte Stufe. Die andere Anlauf fläche wird gebildet durch den Innenring des das Hauptlager bildenden Kugellagers.

Durch die Sackbohrung 5 und den darin angeordneten Lagern 6 und 11 ist die Drehachse der Ankerwelle 21 festgelegt. Das Gehäuse 20 des Elektromotors muß nun konzentrisch zur Ankerwelle 21 ausgerichtet werden. Dies geschieht dadurch, daß in der Flanschfläche 4 eine umlaufende Nut 40 vorgesehen ist, die sich konzentrisch zur Sackbohrung 5 erstreckt. Die innenliegende Flanke 41 der Nut 40 weist einen Durchmesser auf, der dem Innendurchmesser des topfförmigen Gehäuses 20 entspricht. Wird nun das Gehäuse 20 mit seinem Rand 42 in die Nut 40 eingesteckt, so wird es, durch die Innenflanke 41 zur Achse der Ankerwelle 21 ausgerichtet.

Die Befestigung des Gehäuses 20 erfolgt durch einen Klemmring 45, der mit in die Nut eingesteckt wird und aus verformbarem Material besteht. Dazu ist die äußere Flanke 46 der Nut 40 derart gegenüber dem Boden der Nut geneigt, daß sich die Weite der Nut 40 zum Boden hin vergrößert. Wenn der Klemmring 45 in die Nut 40 eingedrückt wird, verformt er sich und wird in den hinterschnittenen Bereich der äußeren Flanke 46 gedrückt. Die dabei hervorgerufene Keilwirkung bewirkt eine sichere Befestigung des Motorgehäuses 20 in der Nut 40 und damit am Pumpengehäuse 3.

Im Ausführungsbeispiel nach Fig. 1 wird die Bürstentrageplatte 26 unmittelbar auf der Flanschfläche 4 befestigt. Da Halteelmente für die Bürstenköcher 60 auch unter die Trageplatte 26 greifen, ist es notwendig, die Trageplatte 26 bzw. die Halteelemente gegenüber dem Pumpengehäuse 3, das üblicherweise aus elektrisch leitendem Material besteht (z. B. aus Aluminium), zu isolieren. Dazu wird eine Isolationsfolie 61 auf die Flanschfläche 4 des Pumpengehäuses 3 aufgeklebt.

Die Kupplung zwischen der Verlängerung 30 sowie der Ankerwelle 21 erfolgt wie im folgenden beschrieben.

Die Ankerwelle 21 weist eine axial verlaufende Sackbohrung 70 auf, an deren Innenwand Schienen 71 vorgesehen sind. Das entsprechende Ende der Verlängerung 30 weist einen Durchmesser auf, der in etwa dem Durchmesser der Bohrung in der Motorwelle entspricht, Außerdem ist es mit Längsnuten versehen. Wenn die Verlängerung 30 mit der Motorwelle 21 zusammengesteckt wird, laufen die Schienen 71 in die Nuten 72 hinein, so daß die beiden Teile verdrehsicher gegeneinander gehalten sind.

Die Länge der Ankerwelle 21 kann nun so ausgelegt werden, daß ihre zum Pumpengehäuse 3 gewandte Stirnfläche an den Innenring des Hauptlagers 7 zur Anlage kommt. Dies bewirkt eine Fixierung des Hauptlagers 7 im Pumpengehäuse 3.

Der Zusammenbau von Pumpe 3 und Elektromotor 20 erfolgt in der Art, daß zunächst in das Pumpengehäuse 3, Haupt- und Nebenlager sowie die Verlängerung 30 eingesetzt werden. Dann wird die Isolationsfolie auf die Flanschfläche 4 geklebt und die Bürstentrageplatte 26 befestigt. Anschließend kann die Ankerwelle 21 auf die Verlängerung 30 aufgesteckt werden. Danach wird das Motorgehäuse 20 über die Ankerwelle 21 gestülpt, wobei der Rand 42 des Gehäuses 20 in die Nut 40 eingesetzt wird. Dort wird das Gehäuse 20, wie schon beschrieben, mit Hilfe des Klemmrings 42 befestigt.

Die Ausführung nach Fig. 2 unterscheidet sich in zweierlei Hinsicht. Zum einen sind Verlängerung 30 und Ankerwelle 21 einteilig ausgeführt. Zum anderen ist eine andere Befestigung der Bürstentrageplatte 26 vorgesehen. Diefolgende Beschreibung ist nicht so zu verstehen, daß beide Maßnahmen nur in Kombination möglich sind. Es ist ebenfalls denkbar, die entsprechenden Teilmerkmale der Ausführungsformen untereinander zu kombinieren.

Zur Befestigung der Bürstentrageplatte 26 ist in der Ausführungsform nach Fig. 2 kurz unterhalb des Rands 24 des Gehäuses 20 eine umlaufende Kante 80 vorgesehen.

Wenn die Bürstentrageplatte gegen die Kante gedrückt wird, schnappt eine Rastnase 81 ein und hält die Bürstentrageplatte 26 gegen die Kante 80.

Dadurch wird ein Abstand zum Pumpengehäuse eingehalten, so daß eine gesonderte Isolierung (wie nach Fig. 1) nicht notwendig ist.

Wie schon erläutert, ist die Welle 21 mit Ihrer Verlängerung 30 einstückig ausgebildet. Dies macht es notwendig, für den Exzenter 9 sowie das abschließende Ende der Verlängerung 30 immer kleinere Stufungen vorzusehen, so daß die jeweiligen Mantelflächen einen immer kleiner werdenden Abstand zur Achse der Welle 21 einhalten. Zur Montage wird zunächst das Nebenlager 11 sowie das Hauptlager 7 in das Pumpengehäuse 3 eingesteckt. Außerdem wird das Exenterlager in das Pumpengehäuse eingebracht.

Die Welle 21 wird nun zusammen mit der vormontierten Trageplatte 26 und dem Gehäuse 20 auf die Flanschfläche 4 des Pumpengehäuses 3 aufgesetzt. Während die Welle 21 mit ihrer Verlängerung 30 in die Bohrung 6 des Pumpengehäuses 3 eingeführt wird, wird gleichzeitig der Rand des Gehäuses 20 in die umlaufende Nut 40 eingesetzt und dort, wie schon oben beschrieben, befestigt.

An dieser Stelle sei angemerkt, daß statt eines Klemmrings 45 auch andere Befestigungsarten denkbar sind, z. B. können sogenannte Selfclinchverbindungen vorgesehen werden. Bei diesen Verbindungen wird mit Eindrücken des Rands des Gehäuses 20 Verformungen im Pumpengehäuse 3 hervorgerufen, die hinter eine Hinterschneidung am Rand des Gehäuses 20 gelangen. Auf diese Weise wird das Gehäuse 20 im Pumpengehäuse 3 festgehalten.

### Bezugszeichenliste

- 1: Pumpe
- 2: Elektromotor
- 3: Gehäuse
- 4: Flanschfläche
- 5: Sackbohrung
- 6: erste Stufe
- 7: Hauptlager
- 8: 2. Stufe
- 9: Exzenter
- 10: 3. Stufe
- 11: Nebenlager
- 20: Gehäuse
- 22: Anker
- 23: Kollektor
- 24: Dauermagnete
- 25: Bürsten
- 26: Trägerplatte
- 30: Verlängerung
- 31: Kupplung
- 40: Nut
- 41: Flanke
- 42: Rand
- 45: Klemmring
- 46: Flanke
- 60: Bürstenköcher
- 61: Innovationsfolie
- 70: Sackbohrung
- 71: Schienen
- 72: Längsnuten
- 80: Kante
- 81: Rastnase

## Patentansprüche

1. Elektromotor/Pumpen-Aggregat, bestehend aus einem Elektromotor (2) sowie einer Pumpe (1) wobei der Elektromotor (2) ein topfförmiges Gehäuse (20) aufweist, das mit seinem offenen Ende auf eine Flanschfläche (4) am Gehäuse (3) aufgesetzt ist, einer Ankerwelle (21), deren Verlängerung (30) in eine Stufenbohrung (5) im Pumpengehäuse (3) hineinreicht, wobei die Verlängerung (30) der Ankerwelle (21) durch mindestens ein Hauptlager (7) im Pumpengehäuse (3) gehalten wird, **dadurch gekennzeichnet,** daß in der Flanschfläche eine konzentrisch zur Stufenbohrung (5) verlaufende Nut (40) vorgesehen ist, in die das Elektromotorgehäuse (20) mit seinem Rand (42) einsteckbar ist.

2. Aggregat nach Anspruch 1, **dadurch gekennzeichnet**, daß das Gehäuse (20) in der Nut (40) mittels eines Klemmrings (45) gehalten wird.

3. Aggregat nach Anspruch 1, **dadurch gekennzeichnet,** daß eine Bürstentrageplatte (26) vorgesehen ist, die isoliert am Pumpengehäuse (3) befestigt ist.

4. Aggregat nach Anspruch 3, **dadurch gekennzeichnet,** daß die Isolation durch eine auf das Gehäuse (3) autgeklebte Isolationsfolie (61) bewirkt wird.

5. Aggregat nach Anspruch 1, **dadurch gekennzeichnet,** daß Motorwelle (21) und Verlängerung (30) zweiteilig ausgebildet sind, und über eine Kupplung (31), die eine Verdrehung der genannten Teile gegeneinander verhindert, verbunden sind.

6. Aggregat nach Anspruch 1, **dadurch gekennzeichnet,** daß die Bürstentrageplatte mittels einer Schnappverbindung (80, 81) im Elektromotorgehäuse (20) gehalten ist.

## Claims

1. Electric motor-and-pump assembly which includes an electric motor (2) and a pump (1), wherein the electric motor (2) has a bowl-shaped housing (20) which, with its open end, is mounted on a flange surface (4) on the housing (3), an armature shaft (21) having an extension (30) which reaches into a stepped bore (5) in the pump housing (3), with the extension (30) of the armature shaft (21) being retained by at least one main bearing (6) in the pump housing (3),
**characterized** in that the flange surface includes a groove (40) which extends concentrically to the stepped bore (5), into which groove the electric motor housing (20) with its rim (42) can be mounted.

2. Assembly as claimed in claim 1,
**characterized** in that the housing (20) is retained in the groove (40) by a clamping ring (45).

3. Assembly as claimed in claim 1,
**characterized** in that a brush support plate (26) is provided which is attached to the pump housing (3) in an insulated manner.

4. Assembly as claimed in claim 3,
**characterized** in that the insulation is provided by an insulating foil (61) which is cemented to the housing (3).

5. Assembly as claimed in claim 1,
**characterized** in that the motor shaft (21) and the extension (30) have a bipartite design and are interconnected by a coupling (31) which prevents rotation of the mentioned parts relative to one another.

6. Assembly as claimed in claim 1,
**characterized** in that the brush support plate is retained in the electric motor housing (20) by way of a catch-type engagement (80, 81).

## Revendications

1. Groupe moteur électrique/pompe, constitué d'un moteur électrique (2), d'une pompe (1), le moteur électrique (2) comportant un boîtier (20) en forme de cuvette qui est posé par son extrémité ouverte sur une surface d'accostage (4) située sur le boîtier (3), et d'un arbre d'induit (21) dont une partie de prolongement (30) pénètre dans un alésage étagé (5) ménagé dans le boîtier de pompe (3), la partie de prolongement (30) de l'arbre d'induit (21) étant maintenue dans le boîtier de pompe (3) par au moins un roulement principal (7), caractérisé en ce que, dans la surface d'accostage, il est prévu une gorge (40), coaxiale à l'alésage étagé (5), dans laquelle le boîtier de moteur électrique (20) peut être emboîté par son bord (42).

2. Groupe suivant la revendication 1, caractérisé en ce que le boîtier (20) est maintenu dans la gorge (40) au moyen d'un anneau élastique de blocage (45).

3. Groupe suivant la revendication 1, caractérisé en ce qu'il est prévu une plaque porte-balais (26) qui est fixée d'une façon isolée sur le boîtier de pompe (3).

4. Groupe suivant la revendication 3, caractérisé en ce que l'isolation est assurée au moyen d'une feuille d'isolation (61) collée sur le boîtier (3).

5. Groupe suivant la revendication 1, caractérisé en ce que l'arbre de moteur (21) et la partie de prolongement (30) sont constitués de deux pièces et sont reliés par un accouplement (31) qui cale lesdites pièces en rotation l'une par rapport à l'autre.

6. Groupe suivant la revendication 1, caractérisé en ce que la plaque porte-balais est maintenue dans le boîtier de moteur électrique (20) au moyen d'une jonction à enclenchement (80, 81).
